# EUROPEAN PATENT APPLICATION

(11) **EP 4 008 625 A1**
(43) Date of publication of application: **08.06.2022**
(21) Application number: 21212299.8
(22) Date of filing: 03.12.2021
(51) Int. Cl.: B63C 9/20, H01Q 15/08, H01Q 15/23

(54) **REFLECTOR LENS STRUCTURED LIFE BUOY**

(30) Priority: 04.12.2020 CN 202011393372
(71) Applicant: Guangdong Fushun Tianji Communication Co., Ltd., Leping Town, Sanshui District Foshan City Guangdong 528137 (CN)
(72) Inventor: ZHENG, Hongzhen, Foshan City, 528137 (CN); LU, Yongchao, Foshan City, 528137 (CN); SUN, Yaozhi, Foshan City, 528137 (CN)
(74) Representative: ABG Intellectual Property Law, S.L.

(57) **Abstract**

The present disclosure relates to a reflector lens structured life buoy, including a life buoy body. Several sections of lenses are arranged in the life buoy body. Each section of lens is of a curved cylinder structure. These lenses are distributed in a circular array by taking a center of the life buoy body as a center, so that these lenses are encircled to form a circular ring. Cross sections of all the sections of lenses in a radial direction are of a layered structure, and have dielectric constants that continuously change from 2 to 1 from the center to the outer layer. Reflection sheets are laid on circumferential surfaces of all the sections of lenses to form reflection sheet coverage regions and non-reflection sheet coverage regions on the circumferential surfaces of the lenses; and surfaces of the reflection sheets fitted to the circumferential surfaces of the lenses are reflection surfaces. The present disclosure has the characteristics of simple structure, scientific design and convenient use, can realize showing a big image on a radar screen and avoid missing in search and rescue, and is high in safety, convenient to use, and the like.

## Description

### TECHNICAL FIELD

The present disclosure relates to the technical field of life-saving equipment, and particularly relates to a reflector lens structured life buoy.

### BACKGROUND ART

Life jackets, life buoys, and lifeboats are commonly used marine life-saving devices. They all float on the sea by buoyancy, so that people can float on the sea and wait for rescue when they fall into water. In order to facilitate patrol personnel to find people in distress, some current life-saving devices are also equipped with signal transmitters, so that the patrol personnel can find people in distress through signal receiving equipment. Since the life-saving devices are equipped with the signal transmitters, they also need to be equipped with power supplies. Such a life-saving device has a relatively complicated structure and needs to be charged when it is not used for a long time. Furthermore, this life-saving device is also prone to run out of power when used, which is extremely inconvenient to use.

In addition, there are also now some life-saving devices equipped with signal reflection mechanisms. These life-saving devices, such as the technical solution with the patent application number 2017213670053, entitled "Marine Radar Maritime Search and Rescue device", include: a life jacket body and a small-sized radar corner reflector. The small-sized radar corner reflectors are uniformly arranged on the chest and shoulders of the life jacket body. Each small-sized radar corner reflector includes an equilateral triangle vertical metal reflection sheet I, an equilateral triangle vertical metal reflection sheet II, a square horizontal metal reflection sheet and a plastic protective sleeve. The equilateral triangle vertical metal reflection sheet I and the equilateral triangle vertical metal reflection sheet II are fixedly connected in a cross manner along their center lines. The bottom edges of the equilateral triangle vertical metal reflection sheet I and the equilateral triangle vertical metal reflection sheet II are fixedly connected with two diagonals of the square horizontal metal reflection sheet to form a rectangular pyramid-shaped small-sized radar corner reflector; and the plastic protective sleeves are fixed at a vertex angle and four corners of the rectangular pyramid of the small-sized radar corner reflector. The small-sized radar corner reflector of this structure has the following shortcomings when applied to the life buoy. First, the small-sized radar corner reflector has a relatively small reflection range, and omission easily occurs during searching. Second, the small-sized radar corner reflector is a pointed cone-shaped structure, and is arranged on an outer surface of the life buoy, which is easy to scratch a person falling into water, so that the safety is low, and the life buoy is inconvenient to use.

### SUMMARY

The present disclosure aims to provide a reflector lens structured life buoy. The reflector lens structured life buoy has the advantages of simple structure, scientific design and convenient use, can realize showing a big image on a radar screen and avoid missing in search and rescue, and is high in safety, convenient to use, and the like.

The technical solution of the reflector lens structured life buoy is realized below. A reflector lens structured life buoy includes a life buoy body. Several sections of lenses are arranged in the life buoy body. Each section of lens is of a curved cylinder structure. These lenses are distributed in a circular array by taking a center of the life buoy body as a center, so that these lenses are encircled to form a circular ring. Cross sections of all the sections of lenses in a radial direction are of a layered structure, and have dielectric constants that continuously change from 2 to 1 from the center to the outer layer. Reflection sheets are laid on circumferential surfaces of all the sections of lenses to form reflection sheet coverage regions and non-reflection sheet coverage regions on the circumferential surfaces of the lenses; and surfaces of the reflection sheets fitted to the circumferential surfaces of the lenses are reflection surfaces.

Further, the lenses are made of a foamed medium material.

Further, between two adjacent lenses: the reflection sheet coverage region of one lens and the reflection sheet coverage region of the other lens are staggered.

Further, a center line of each section of lens overlaps a center line of the life buoy body.

Further, a plurality of reflection sheets are laid on the circumferential surface of each section of lens, and these reflection sheets are disposed around the center line of the lens.

The reflector lens structured life buoy has the beneficial effects as follows. According to the reflector lens structured life buoy, the lenses and the reflection sheets are arranged in the life buoy body, so that during use, if a person falling into water escapes with the reflector lens structured life buoy, in the later search and rescue operation process, radar waves emitted by a radar transmitter of search and rescue personnel will enter the lenses from the non-reflection sheet coverage regions of the lenses. After passing through the lenses, the radar waves are emitted from the non-reflection sheet coverage regions of the lenses via reflection of the reflection sheets, so that the radar waves can be refracted into the air in a manner of being symmetric about a sphere center and are amplified. In this way, a small target will be shown as a big image on the radar screen, and the search and rescue personnel can easily find the person falling into water. During use, the life buoy does not need to be charged and will not stab the person falling into water. The reflector lens structured life buoy has the advantages of simple structure, scientific design and convenient use, can realize showing a big image on the radar screen and avoid missing in search and rescue, and is high in safety, convenient to use, and the like.

The present disclosure further provides a reflector lens structured life buoy. The reflector lens structured life buoy has the advantages of simple structure, scientific design and convenient use, can realize showing a big image on the radar screen and avoid missing in search and rescue, and is high in safety, convenient to use, and the like.

The technical solution of the reflector lens structured life buoy is realized below. A reflector lens structured life buoy includes a life buoy body. The life buoy body is a circular-ring-shaped lens. A cross section of the life buoy body is of a layered structure, and has a dielectric constant that continuously changes from 2 to 1 from the center to the outer layer. A reflection sheet is laid on a surface of the life buoy body to form a reflection sheet coverage region and a non-reflection sheet coverage region on the surface of the life buoy body. A surface of the reflection sheet fitted to the life buoy body is a reflection surface.

Further, the life buoy body is made of a foamed medium material.

Further, several reflection sheet groups are arranged on the surface of the life buoy body; these reflection sheet groups are distributed in a circular array by taking a center of the life buoy body as a center. Each reflection sheet group includes several reflection sheets. The reflection sheets of each reflection sheet group are arranged around a center line of the life buoy body. Between two adjacent reflection sheet groups: the reflection sheets of one reflection sheet group and the reflection sheets of the other reflection sheet group are staggered.

Further, a protective layer is also wrapped on the life buoy body, and the reflection sheets are arranged between the protective layer and the life buoy body.

The reflector lens structured life buoy has the beneficial effects as follows. The cross section of the life buoy body of the reflector lens structured life buoy is of the layered structure, and has the dielectric constant that continuously changes from 2 to 1 from the center to the outer layer. The reflection sheet is also laid on the life buoy body, so that during use, if a person falling into water escapes with the reflector lens structured life buoy, in the later search and rescue operation process, radar waves emitted by a radar transmitter of search and rescue personnel will enter the life buoy body from the non-reflection sheet coverage region of the life buoy body. After passing through the life buoy body, the radar waves are emitted from the non-reflection sheet coverage region of the life buoy body via reflection of the reflection sheet, so that the radar waves can be refracted into the air in a manner of being symmetric about a sphere center and are amplified. In this way, a small target will be shown as a big image on the radar screen, and the search and rescue personnel can easily find the person falling into water. During use, the life buoy does not need to be charged and will not stab the person falling into water. The reflector lens structured life buoy has the advantages of simple structure, scientific design and convenient use, can realize showing a big image on the radar screen and avoid missing in search and rescue, and is high in safety, convenient to use, and the like.

### BRIEF DESCRIPTION OF THE DRAWINGS

FIG. 1 is a schematic structural diagram of Embodiment 1;
FIG. 2 is a schematic structural diagram after a life buoy body is removed from Embodiment 1;
FIG. 3 is a schematic structural diagram of Embodiment 2;
FIG. 4 is a schematic structural diagram of a life buoy body of Embodiment 2;
FIG. 5 is a schematic structural diagram of a section in a direction A-A in FIG. 3 (i.e., a cross section of the life buoy body in a radial direction); and
FIG. 6 is a diagram of a reflection direction after radar waves pass through lenses during use of Embodiment 1.
Reference signs in the drawings: 11: life buoy body; 12: lens; 13: reflection sheet; 14: non-reflection sheet coverage region;
21: life buoy body; 22: reflection sheet; 23: non-reflection sheet coverage region; and 24: protective layer.

### DETAILED DESCRIPTION OF THE EMBODIMENTS

### Embodiment 1

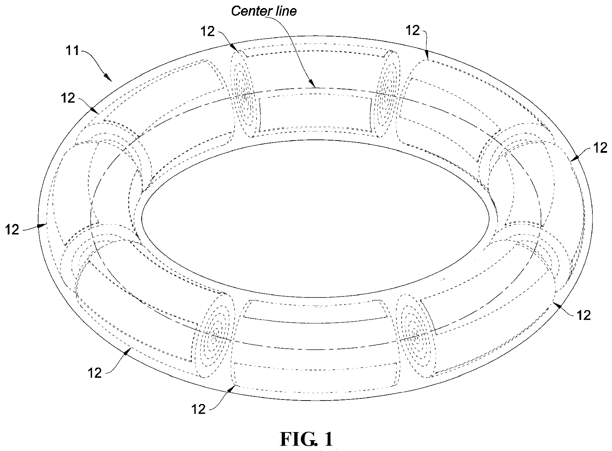

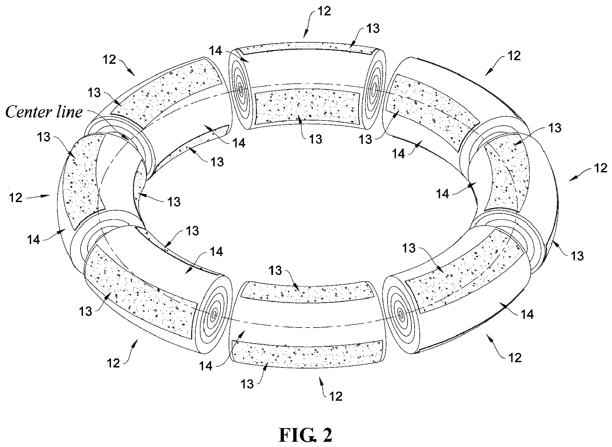

As shown in FIG. 1 and FIG. 2, the present embodiment provides a reflector lens structured life buoy. The life buoy includes a life buoy body 11. Several sections of lenses 12 are arranged in the life buoy body 11. Each section of lens 12 is of a curved cylinder structure. These lenses 12 are distributed in a circular array by taking a center of the life buoy body 11 as a center, so that these lenses 12 are encircled to form a circular ring. Cross sections of all the sections of lenses 12 in a radial direction are of a layered structure. The cross section of each lens 12 in the radial direction is also an end surface of the lens 12. The cross sections of the lenses 12 in the radial direction have dielectric constants that continuously change from 2 to 1 from the center to the outer layer. Reflection sheets 13 are laid on circumferential surfaces of all the sections of lenses 12 to form reflection sheet coverage regions and non-reflection sheet coverage regions 14 on the circumferential surfaces of the lenses 12; and surfaces of the reflection sheets 13 fitted to the circumferential surfaces of the lenses 12 are reflection surfaces. The reflection sheets are metal thin sheets. During use, if a person falling into water escapes with the reflector lens structured life buoy, in the later search and rescue operation process, radar waves emitted by a radar transmitter of search and rescue personnel will enter the lenses 12 from the non-reflection sheet coverage regions 14 of the lenses 12. After passing through the lenses 12, the radar waves are emitted from the non-reflection sheet coverage regions 14 of the lenses 12 via reflection of the reflection sheets 13, so that the radar waves can be refracted into the air in a manner of being symmetric about a sphere center and are amplified. In this way, a small target will be shown as a big image on the radar screen, and the search and rescue personnel can easily find the person falling into water. During use, the life buoy does not need to be charged and will not stab the person falling into water. The reflector lens structured life buoy has the advantages of simple structure, scientific design and convenient use, can realize showing a big image on the radar screen and avoid missing in search and rescue, and is high in safety, convenient to use, and the like.

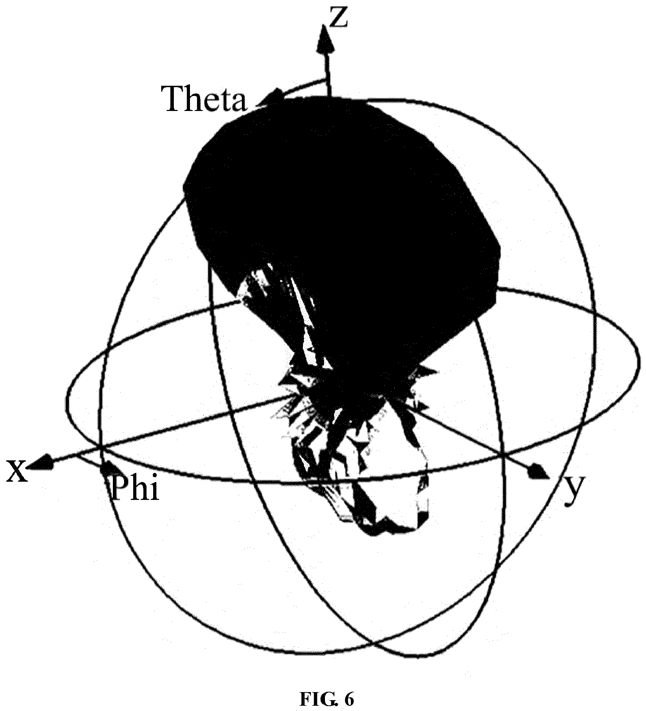

In order to enable the reflector lens structured life buoy to have good floatability, the lens 12 is made of a foamed medium material. In the use process, the reflection direction of the radar waves after passing through the lenses 12 is as shown in FIG. 6. The foamed medium material of the lenses 12 is an existing material. The foamed medium material is like the technical solution No. 201910867980.8 applied by the applicant and entitled "Medium Material and Medium Material Production Method", so descriptions thereof are omitted here.

In order to enable the reflector lens structured life buoy to reflect the radar waves in different directions during use, as shown in FIG. 2, between two adjacent lenses 12: the reflection sheet coverage region of one lens 12 and the reflection sheet coverage region of the other lens 12 are staggered.

In order to make the structure of the reflector lens structured life buoy more reasonable, as shown in FIG. 1 and FIG. 2, the center line of each section of lens 12 overlaps the center line of the life buoy body 11.

In order to make the reflection sheets 13 on all the sections of lenses 12 disposed more reasonably, as shown in FIG. 2, a plurality of reflection sheets 13 are laid on a circumferential surface of each section of lens 12, and these reflection sheets 13 are arranged around the center line of the lens 12. Three reflection sheets 13 are laid on each section of lens 12 of the reflector lens structured life buoy. By this structure, during use, the reflection surfaces of partial reflection sheets 13 of all the sections of lenses 12 and part of the non-reflection sheet coverage regions 14 are upward no matter which surface of the reflector lens structured life buoy is upward, so that the reflector lens structured life buoy can reflect the radar waves.

### Embodiment 2

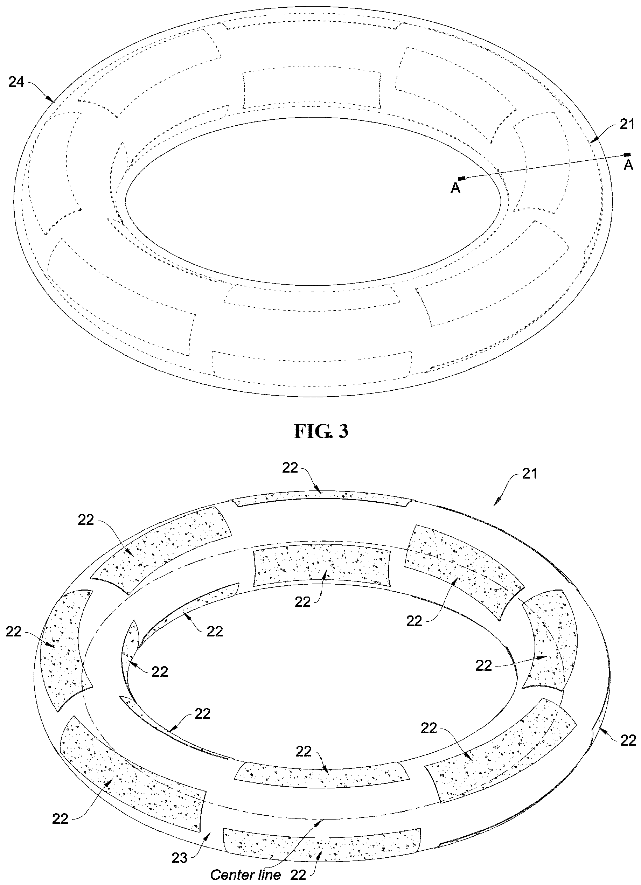

As shown in FIG. 3, FIG. 4 and FIG. 5, the present embodiment is also a reflector lens structured life buoy, including a life buoy body 21. The life buoy body 21 is a circular-ring-shaped lens. A cross section of the life buoy body 21 is of a layered structure, and has a dielectric constant that continuously changes from 2 to 1 from the center to the outer layer. A reflection sheet 22 is laid on a surface of the life buoy body 21 to form a reflection sheet coverage region and a non-reflection sheet coverage region 23 on the surface of the life buoy body 21. A surface of the reflection sheet 22 fitted to the life buoy body 21 is a reflection surface. The reflection sheet is a metal thin sheet. During use, if a person falling into water escapes with the reflector lens structured life buoy, in the later search and rescue operation process, radar waves emitted by a radar transmitter of search and rescue personnel will enter the life buoy body 21 from the non-reflection sheet coverage region 23 of the life buoy body 21. After passing through the life buoy body 21, the radar waves are emitted from the non-reflection sheet coverage region 23 via reflection of the reflection sheet 22, so that the radar waves can be refracted into the air in a manner of being symmetric about a sphere center and are amplified. In this way, a small target will be shown as a big image on the radar screen, and the search and rescue personnel can easily find the person falling into water. During use, the life buoy does not need to be charged and will not stab the person falling into water. The reflector lens structured life buoy has the advantages of simple structure, scientific design and convenient use, can realize showing a big image on the radar screen and avoid missing in search and rescue, and is high in safety, convenient to use, and the like.

In order to enable the reflector lens structured life buoy to have good floatability, the life buoy body 21 is made of a foamed medium material. The foamed medium material of the life buoy body 21 is an existing material. The foamed medium material is like the technical solution No. 201910867980.8 applied by the applicant and entitled "Medium Material and Medium Material Production Method", so descriptions thereof are omitted here.

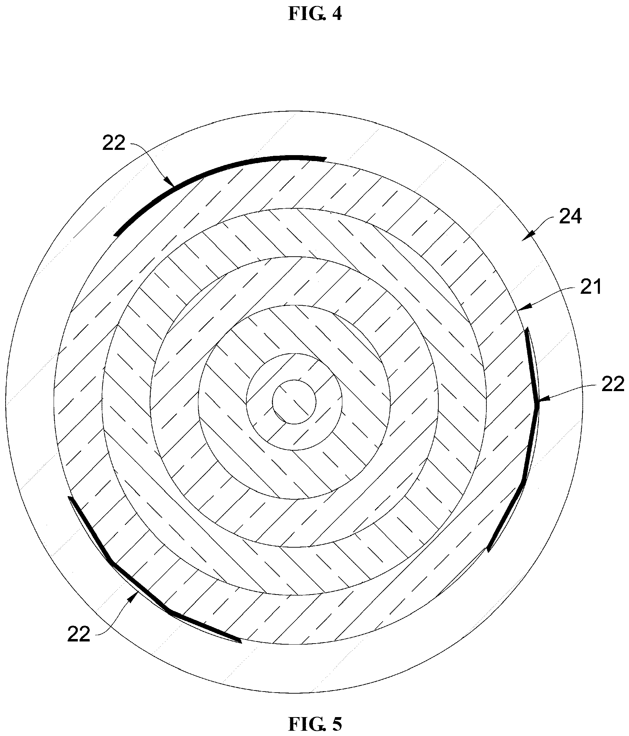

In order to make the reflection sheet 22 of the reflector lens structured life buoy disposed more reasonably, as shown in FIG. 4, several reflection sheet groups are arranged on the surface of the life buoy body 21; these reflection sheet groups are distributed in a circular array by taking a center of the life buoy body 21 as a center. Each reflection sheet group includes several reflection sheets 22. The reflection sheets 22 of each reflection sheet group are arranged around a center line of the life buoy body 21. Between two adjacent reflection sheet groups: the reflection sheets 22 of one reflection sheet group and the reflection sheets 22 of the other reflection sheet group are staggered. Each reflection sheet group of the reflector lens structured life buoy includes three reflection sheets 22. By this structure, during use, the reflection surfaces of partial reflection sheets 22 on the life buoy body 21 and part of the non-reflection sheet coverage region 23 are upward no matter which surface of the reflector lens structured life buoy is upward, so that the reflector lens structured life buoy can reflect the radar waves.

In order to prevent a foreign object from scraping the reflection sheet 22 and prevent the reflection sheet 22 from falling off, as shown in FIG. 3 and FIG. 5, a protective layer 24 is also wrapped on the life buoy body 21, and the reflection sheet 22 is located between the protective layer 24 and the life buoy body 21.

## Claims

1. A reflector lens structured life buoy, comprising a life buoy body, wherein several sections of lenses are arranged in the life buoy body; each section of lens is of a curved cylinder structure; the lenses are distributed in a circular array by taking a center of the life buoy body as a center, so that these lenses are encircled to form a circular ring; cross sections of all the sections of lenses in a radial direction are of a layered structure, and have dielectric constants that continuously change from 2 to 1 from the center to the outer layer; reflection sheets are laid on circumferential surfaces of all the sections of lenses to form reflection sheet coverage regions and non-reflection sheet coverage regions on the circumferential surfaces of the lenses; and surfaces of the reflection sheets fitted to the circumferential surfaces of the lenses are reflection surfaces.

2. The reflector lens structured life buoy according to claim 1, wherein the lens is made of a foamed medium material.

3. The reflector lens structured life buoy according to claim 1, wherein between two adjacent lenses: the reflection sheet coverage region of one lens and the reflection sheet coverage region of the other lens are staggered.

4. The reflector lens structured life buoy according to claim 1, wherein a center line of each section of lens overlaps a center line of the life buoy body.

5. The reflector lens structured life buoy according to claim 1, wherein a plurality of reflection sheets are laid on the circumferential surface of each section of lens; and these reflection sheets are disposed around the center line of the lens.

6. The reflector lens structured life buoy according to claim 5, wherein the number of reflection sheets is preferably one, two, and three; more reflection sheets may be provided according to a need.

7. A reflector lens structured life buoy, comprising a life buoy body, wherein the life buoy body is a circular-ring-shaped lens; a cross section of the life buoy body is of a layered structure, and has a dielectric constant that continuously changes from 2 to 1 from the center to the outer layer; a reflection sheet is laid on a surface of the life buoy body to form a reflection sheet coverage region and a non-reflection sheet coverage region on the surface of the life buoy body; and a surface of the reflection sheet fitted to the life buoy body is a reflection surface.

8. The reflector lens structured life buoy according to claim 7, wherein the life buoy body is made of a foamed medium material.

9. The reflector lens structured life buoy according to claim 7, wherein several reflection sheet groups are arranged on the surface of the life buoy body; the reflection sheet groups are distributed in a circular array by taking a center of the life buoy body as a center; each reflection sheet group includes several reflection sheets; the reflection sheets of each reflection sheet group are arranged around a center line of the life buoy body; and between two adjacent reflection sheet groups: the reflection sheets of one reflection sheet group and the reflection sheets of the other reflection sheet group are staggered.

10. The reflector lens structured life buoy according to claim 7, wherein a protective layer is also wrapped on the life buoy body, and the reflection sheets are arranged between the protective layer and the life buoy body.
